# EUROPEAN PATENT APPLICATION

(11) **EP 2 442 270 A1**
(43) Date of publication of application: **18.04.2012**
(21) Application number: 10013596.1
(22) Date of filing: 13.10.2010
(51) Int. Cl.: G06T 3/00

(54) **Image transmission**

(71) Applicant: Sony Ericsson Mobile Communications AB, 221 88 Lund (SE)
(72) Inventor: Wickström, Olof, 224 68 Lund (SE)
(74) Representative: Sticht, Andreas

(57) **Abstract**

Methods and devices are provided which capture an image with a first resolution. A detail (32) of the image is selected, and the image is downscaled to a lower resolution, where the detail (32) is added to the image with a higher resolution than the resolution of the remaining image. The thus formed combined image is then transmitted.

## Description

The present application relates to image transmission.

The transmission of images via networks is becoming more and more frequent. In some instances, images are captured with a mobile electronic device like a digital camera or a mobile phone incorporating a camera and then transmitted wirelessly or wire-based to recipients. For example, using mobile phones images may be transmitted via MMS (Multi-Media Messaging Service). In other instances, images are uploaded to social media, for example social networks or network communities, the usage of which is becoming more and more frequent in the internet.

Most common digital cameras have a comparatively high image resolution of several megapixels (millions of pixels, i.e. image points), leading to comparatively large file sizes. On the other hand, for use in MMS transmission or for social networks, often smaller file sizes are desirable or even required by a provider of a social network in order to conserve bandwidth and/or storage space. Therefore, when transmitting images in such a way, images with high resolutions have to be downscaled. This, in turn, can lead to important details of the image no longer being recognizable.

### SUMMARY

According to an embodiment, a method is provided, comprising:
capturing an image with a first resolution,
selecting a detail in the image,
downscaling the image to a second resolution smaller than the first resolution,
adding the detail with a third resolution greater than the second resolution to the downscaled image to form a combined image, and
transmitting the combined image.

In an embodiment, the third resolution may be equal to the first resolution.

In an embodiment, the third resolution may be smaller than the first resolution.

In an embodiment, transmitting the combined image may comprise transmitting the combined image via an MMS.

In an embodiment, transmitting the combined image may comprise transmitting the combined image to a social media.

In an embodiment, transmitting the combined image may comprise transmitting the combined image via a cellular network.

According to another embodiment, a device is provided, comprising:
a camera module configured to capture an image with a first resolution,
a user interface configured to enable a user to select a detail in the image,
a processor configured to downscale the image to a second resolution smaller than the first resolution and to add the detail with a third resolution greater than the second resolution to the downscaled image to form a combined image, and communication circuitry configured to transmit the combined image.

In an embodiment, the third resolution may be equal to the first resolution.

In an embodiment, the third resolution may be smaller than the first resolution.

In an embodiment, the communication circuitry may comprise cellular communication circuitry.

In an embodiment, the device may be a mobile electronic device.

In an embodiment, the mobile electronic device may be selected from the group consisting of a digital camera, a mobile phone, a personal digital assistant, a portable gaming device, a laptop computer, a tablet computer and a navigation device.

In an embodiment, the communication circuitry may be configured to transmit the combined image via an MMS.

In an embodiment, the communication circuitry may be configured to transmit the combined image to a social media.

### BRIEF DESCRIPTION OF THE DRAWINGS

Embodiments of the invention will be described with reference to the attached drawings, wherein:
Fig. 1 is a block diagram illustrating an embodiment of a device according to the invention,
Fig. 2 is a flow diagram illustrating an embodiment of a method according to the invention and
Fig. 3 is an example image for illustrating some features of some embodiments of the invention.

### DETAILLED DESCRIPTION OF THE INVENTION

In the following, embodiments of the invention will be described in some detail. It is to be understood that the following description is given only for the purpose of illustration and is not to be taken in a limiting sense. The scope of the invention is not intended to be limited by the embodiments described hereinafter with reference to the accompanying drawings, but is intended to be limited only by the appended claims and equivalence thereof.

It is also to be understood that in the following description of embodiments any direct connection or coupling between functional blocks, components, or other physical or functional units shown in the drawings or described herein could also be implemented by an indirect connection or coupling, i.e. a connection or coupling comprising one or more intervening elements. It should also be noted that functional blocks or units shown in the drawings need not necessarily be implemented separately, but may also be fully or partially implemented in common circuitry in some embodiments. It is further to be understood that any connection which is described as being wire-based in the following specification may also be implemented as a wireless communication connection and vice versa unless noted to the contrary. The features of the various embodiments described herein may be combined with each other unless specifically noted otherwise. On the other hand describing an embodiment with a plurality of features is not to be construed as indicating that all those features are necessary for practising the present invention, as other embodiments may comprise less features and/or alternative features.

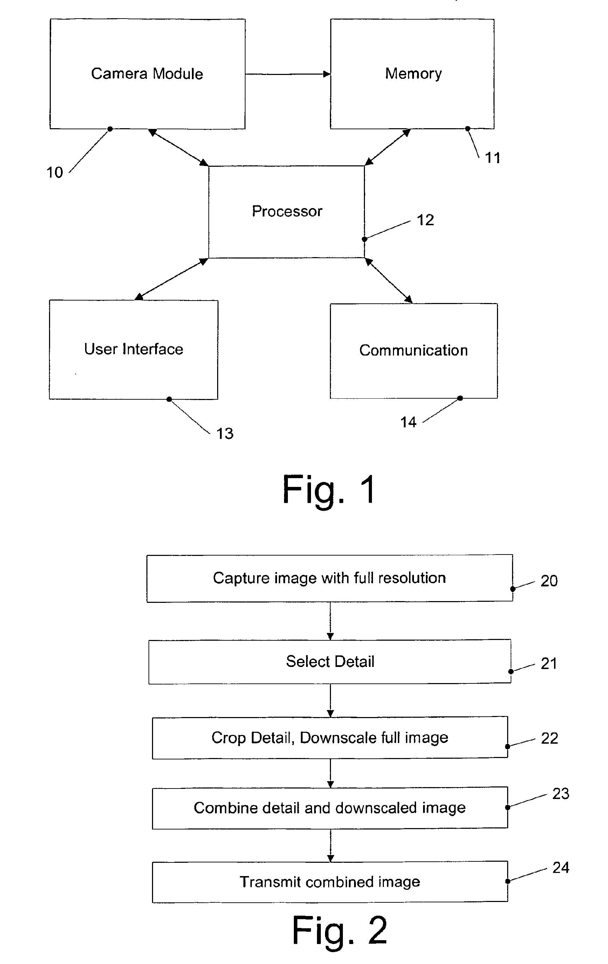

Turning now to the figures, in Fig. 1 a block diagram of a device according to an embodiment is shown. The device may be a mobile electronic device, for example a mobile phone, a digital camera, a personal digital assistant, a portable computer like a laptop or a tablet computer, a portable gaming device, or a navigation device but is not restricted thereto. The device of the embodiment of Fig. 1 comprises a camera module 10 for capturing images. Camera module 10 may be implemented as a conventional camera module with an objective lens of any suitable type (zoom, prime, fixed-focus, variable focus) and an image sensor, for example a CCD (charge-coupled device) or CMOS (Complementary Metal Oxide Semiconductor) sensor. Camera module 10 captures images with a resolution depending on the number of sensor elements of the image sensor, for example a resolution of one or more megapixels. Images captured by camera module 10 may be stored in a memory 11, either directly or after processing by a processor 12. Memory 11 may be a memory fixedly incorporated in the device of Fig. 1, but may also be a memory of a removable medium, for example a chip-card.

Processor 12 controls the operations of the device of Fig. 1 and is coupled with camera module 10 and memory 11. Processor 12 may be a single processor programmed accordingly, for example a general-purpose processor, but may also comprise a plurality of different processors for different tasks, for example a general purpose processor, a digital signal processor, or an image processor.

Processor 12 is coupled with a user interface 13 to receive commands and inputs from a user and also to output information to a user. User interface 13 may, for example comprise a display, a keypad, a joystick and/or buttons. Finally, processor 12 is coupled with communication circuitry to transmit data via a network. Communication circuitry 14 may, for example comprise cellular communication circuitry like GSM communication circuitry or UMTS communication circuitry, may comprise other wireless communication circuitry like Bluetooth communication circuitry or WLAN communication circuitry and/or may comprise wire-bound communication circuitry, for example an Ethernet interface. In some instances, a user may wish to transmit an image captured by camera module 10 using communication circuitry 14. For example, a user may wish to send the image via an MMS (Multi-Media Messaging Service) or may want to upload an image to social media like a social network on the internet or other internet communities. In such cases, transmitting the image captured by camera module 10 with full resolution may consume too much bandwidth to be feasible, for example in the case of MMS messages, or may exceed limits allowed by a certain social network or internet community. On the other hand, simply downscaling the image to a smaller resolution and smaller file size may undesirably make important features of the image unrecognizable.

Therefore, the device of Fig. 1 implements a possibility for a user to select a detail to be preserved via user interface 13, and then processor 12 processes an image to be sent by downscaling the complete image to a lower resolution, while preserving the detail either at full resolution or with a comparatively high reduced resolution which still preserves the necessary details. The detail with the higher resolution and the remaining image are combined in a single combined image which is then transmitted via communication portion 14. In this way, both the context, i.e. the complete image, as well as the details may be transmitted with a reduced file size compared with the complete image at full resolution.

It should be noted that in the embodiment of Fig. 1, further elements may be present which are not explicitly shown, in particular elements serving functions which are not related to the transmission of images. For example, if the device is a mobile phone or a digital camera, additionally a GPS-receiver or similar position determining device may be present.

In Fig. 2, a corresponding embodiment of a method is schematically shown. The method of Fig. 2 may be implemented in the device of Fig. 1, for example by configuring/programming processor 12 and user interface 13 to perform the corresponding actions, but may also be implemented separately there from.

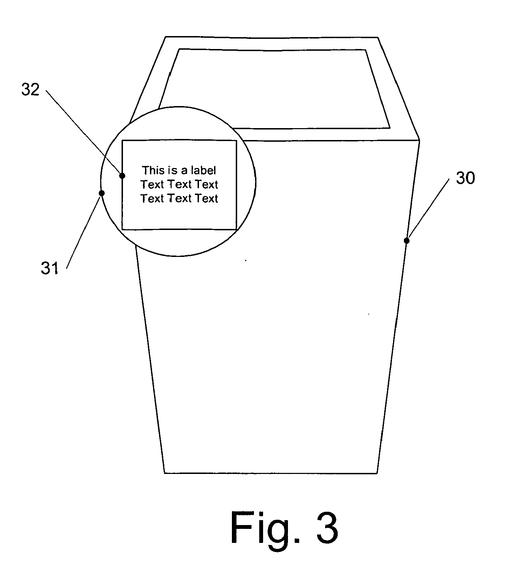

For illustrating the embodiment of Fig. 2 further, reference will additionally be made to Fig. 3 which shows an example of an image. Of course, the image example of Fig. 3 serves only to illustrate the embodiment of Fig. 2 and other embodiments and is not to be construed as limiting, as embodiments of the present application are applicable to any kind of digital image.

At 20 in Fig. 2, an image is captured for example with a full resolution determined by an image sensor used for capturing the image. In some embodiments, the image may also be captured with a resolution lower than the full resolution. This image will also be referred to as 'full image' in the following.

At 21, a detail in the image is selected. This selection may be for example performed on a display of a corresponding device, for example on a display of user interface 13 of Fig. 1, using a moveable cursor, for example a circular cursor or a rectangular cursor. As an example, Fig. 3 shows an image of a dustbin 30. On dustbin 30, a label 32 with some text is provided. This label is selected as a detail as represented by a circle 31, as the label 32 contains text, which when downscaling the image later, may become illegible.

At 21, the detail is cropped, i.e. the detail is prepared with the resolution of the full image, and the full image is downscaled to a lower resolution. In other embodiments, both the detail and the full image may be downscaled to a lower resolution, with the resolution of the downscaled detail being higher than the resolution of the downscaled full image.

At 23, the detail and the downscaled image are combined to form a combined image. The combined image may for example look like Fig. 3, with the details being surrounded by a circle or a similar marker which for example may look like a magnifying glass. However, any other arrangement of detail and image is also possible.

At 24, the combined image is then transmitted, for example transmitted as an MMS or uploaded to some social media or also sent via e-mail.

As the embodiment of Fig. 2 the combined image is transmitted, the method also works well with systems which allow only one image in a single message like an MMS.

The present invention is not to be construed as being limited to the embodiments shown.

## Claims

1. A method, comprising:
capturing an image with a first resolution,
selecting a detail in the image,
downscaling the image to a second resolution smaller than the first resolution,
adding the detail with a third resolution greater than the second resolution to the downscaled image to form a combined image, and
transmitting the combined image.

2. The method of claim 1, wherein the third resolution is equal to the first resolution.

3. The method of claim 1, wherein the third resolution is smaller than the first resolution.

4. The method of any one of claims 1 to 3, wherein transmitting the combined image comprises transmitting the combined image via an MMS.

5. The method of any one of claims 1 to 3, wherein transmitting the combined image comprises transmitting the combined image to a social media.

6. The method of any one of claims 1 to 5, wherein transmitting the combined image comprises transmitting the combined image via a cellular network.

7. A device, comprising:
a camera module (10) configured to capture an image with a first resolution,
a user interface (13) configured to enable a user to select a detail in the image,
a processor (12) configured to downscale the image to a second resolution smaller than the first resolution and to add the detail with a third resolution greater than the second resolution to the downscaled image to form a combined image, and communication circuitry (14) configured to transmit the combined image.

8. The device of claim 7, wherein the third resolution is equal to the first resolution.

9. The device of claim 7, wherein the third resolution is smaller than the first resolution.

10. The device of any one of claims 7 to 9, wherein the communication circuitry (14) comprises cellular communication circuitry.

11. The device of any one of claims 8 to 10, wherein the device is a mobile electronic device.

12. The device of claim 11, wherein the mobile electronic device is selected from the group consisting of a digital camera, a mobile phone, a personal digital assistant, a portable gaming device, a laptop computer, a tablet computer and a navigation device.

13. The device of any one of claims 8 to 12, wherein the communication circuitry is configured to transmit the combined image via an MMS.

14. The device of any one of claims 8 to 13, wherein the communication circuitry is configured to transmit the combined image to a social media.
